(19) Europäisches Patentamt
European Patent Office
Office européen des brevets

(11) EP 0 808 866 A2

(12) EUROPÄISCHE PATENTANMELDUNG

(43) Veröffentlichungstag:
**26.11.1997 Patentblatt 1997/48**

(51) Int. Cl.[6]: **C08K 3/22**, C08K 3/38

(21) Anmeldenummer: **97107714.4**

(22) Anmeldetag: **12.05.1997**

(84) Benannte Vertragsstaaten:
**BE DE ES FR GB IT NL**

(30) Priorität: **24.05.1996 DE 19620993**

(71) Anmelder: **BAYER AG**
**51368 Leverkusen (DE)**

(72) Erfinder:
- **Magerstedt, Herbert**
  **47445 Moers (DE)**
- **Gerling, Frank**
  **40223 Düsseldorf (DE)**

# (54) Laserbeschriftbare Polymerformmassen

(57) Laserbeschriftbare thermoplastische Formmassen, enthaltend

A) 99,995 bis 30 Gew.-Teile thermoplastisches Polymer,

B) 0,005 bis 3 Gew.-Teile Borsäureanhydrid,

C) 0 bis 50 Gew.-Teile Füll- und Verstärkungsstoffe,

D) 0 bis 60 Gew.-Teile Flammschutzadditive,

E) 0 bis 30 Gew.-Teile Elastomermodifikatoren,

F) 0 bis 8 Gew.-Teile Antimontrioxid

G) 0 bis 3 Gew.-Teile Kupfer (II)-pyrophosphat-Hydrat.



Printed by Rank Xerox (UK) Business Services
2.14.23/3.4

**Beschreibung**

Die Erfindung betrifft thermoplastische Polymer-Formmassen mit einem bestimmten Additivsystem, sowie aus diesen thermoplastischen Formmassen hergestellten Formkörper zur Laserbeschriftung.

Die Aufbringung von Mustern, Buchstaben, Zahlen und/oder Bildern mittels Laserstrahlenschreiber zur Kennzeichnung und Dekoration von Formteilen aus Kunststoffen gewinnt in zunehmenden Maße an Bedeutung. Neben der Wirtschaftlichkeit gegenüber herkömmlichen Beschriftungsverfahren bietet die Laserbeschriftung hohe Flexibilität hinsichtlich Schriftart, Schriftgröße und Schriftdesign, unabhängig von der Lotgröße. Das Markieren von elektrischen/elektronischen Bauelementen, Tastenkappen, Gehäusen und Ausweiskarten ist eine klassische Anwendung für Laserbeschriftung.

Folgende Möglichkeiten zur Kennzeichnung von Kunststoffen mittels Laserbeschriftung sind bekannt:

1. Dunkle Zeichen auf hellem Hintergrund

Eine Polymermatrix wird mit hellen Färbemitteln - Pigmenten oder Farbstoffen - eingefärbt. Bei der Laserbeschriftung wird durch Absorption der Laserenergie die Polymermatrix/ das Färbemittel partiell carbonisiert. Dabei entsteht eine dunkle Verfärbung der hellen Polymermatrix. Dieses Verhalten ist auf Polymere, die zum Carbonisieren neigen, beschränkt.

Die hierdurch erreichbaren Kontrastverhältnisse reichen für viele Einsatzgebiete nicht aus.

Die Zugabe von Färbemitteln, die durch Absorption der Laserenergie ihre Farbe ändern, wird in EP-A 0 190 997 beschrieben. So wird z. B. Polybutylenterephthalat mit Eisenoxid rot gefärbt. Bei der Laserbeschriftung entstehen dunkle Zeichen auf rotem Hintergrund. Das Kontrastverhältnis hat sich als nicht ausreichend erwiesen.

2. Helle Zeichen auf dunklem Hintergrund:

Für diese Art der Beschriftung haben sich Polymere, Färbemittel oder Additive, die durch Absorption der Laserenergie zum Schäumen neigen, bewährt. Durch das Aufschäumen entstehen helle Schriften auf dunklem Untergrund. Die erreichbaren Kontrastverhältnisse sind für viele Einsatzgebiete nicht ausreichend.

Aus EP-A 400305 sind laserbeschriftbare Formmassen bekannt, die als Zuschlagstoffe Kupfer(II)-hydroxid-phosphat oder Molybdän(VI)-Oxid enthalten.

Die vorliegende Erfindung betrifft Polymerformmassen, die bei Absorption der Laserenergie dunkle Zeichen auf hellem Hintergrund mit sehr hohem Kontrastverhältnis ergeben.

Überraschenderweise wurde gefunden, daß Polymerformmassen, die Borsäureanhydrid allein oder in Kombination mit Kupferpyrophosphathydrat oder Antimontrioxid enthalten, Formmassen ergeben, bei denen in der Polymermatrix dunkle Zeichen auf hellem Hintergrund durch Absorption der Laserenergie erreicht werden können. Durch Veränderung der Laserenergie und/oder der Schreibgeschwindigkeit können verschiedene Graustufen erhalten werden.

Gegenstand der vorliegenden Erfindung sind daher thermoplastische Formmassen, enthaltend

A) 99,995 bis 30, vorzugsweise 99,97 bis 35, insbesondere 99,95 bis 40 Gew.-Teile thermoplastisches Polymer,

B) 0,005 bis 3,0, vorzugsweise 0,01 bis 1,5 Gew.-Teile Borsäureanhydrid,

C) 0 bis 50 Gew.-Teile Füll- und Verstärkungsstoffe,

D) 0 bis 60 Gew.-Teile Flammschutzadditive,

E) 0 bis 30, vorzugsweise 0 bis 25 Gew.-Teile Elastomermodifikatoren,

F) 0 bis 8 Gew.-Teile Antimontrioxid,

G) 0 bis 3, vorzugsweise 0 bis 1,5 Gew.-Teile Kupfer (II)-pyrophosphat-Hydrat.

Gegenstand der Erfindung ist weiterhin die Verwendung der oben genannten thermoplastischen Formmassen zur Herstellung von Formkörpern oder Formteilen, die mittels Laserenergie beschriftet werden sowie die daraus hergestellten Formkörper.

Gegenstand der Erfindung ist weiterhin ein Verfahren zur Beschriftung von Formkörpern mittels Laserenergie.

Als Energiequelle können handelsübliche Lasersysteme, bevorzugt Nd-YAG-Festkörperlaser, verwendet werden. Die Wellenlänge kann zwischen 193 und 10.600 nm, bevorzugt bei 532 und 1.064 nm liegen.

Die erfindungsgemäß verwendeten Formmassen können zur Aufbringung von optischen Informationen in Form von Mustern, Grafiken, Zahlen, Buchstaben, Schriftzeichen, Bildern (z. B. Passbildern, Portraits, Fotos) usw. mittels Laserenergie, z. B. durch Laserstrahlenschreiber eingesetzt werden.

So können z. B. fotografische Abbildungen auf die erfindungsgemäß verwendeten Formmassen übertragen werden.

**Komponente A**

Als Polymermatrix eignen sich Polymere oder Copolymere, z. B. auf Basis von Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylenglykol- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 19 00 270 und der US-PS 3 692 744 beschrieben sind, verzweigt werden. Beispiele bevorzugtes Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylentherephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrisic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Unter aromatischen Polycarbonaten im Sinne dieser Erfindung werden Homopolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole

sowie deren kernalkylierte und kernhalogenierte Derivate.

Diese und weitere geeignete Diphenole sind z.B. in den US-PS 3 028 365, 2 999 835, 3 148 172, 2 275 601, 2 991 283, 3 271 367, 3 062 781, 2 970 131 und 2 999 846, in den deutschen Offenlegungsschriften 1 570 703, 2 063 050, 2 063 052, 2 211 956, 2 211 957 der französischen Patentschrift 1 561 518 und in der Monographie "H. Schnell, Chemistry und Physics of Polycarbonates, Interscience Publishers, New York 1964", beschrieben.

Bevorzugte Diphenole sind beispielsweise:

2,2-Bis-(4-Hydroxyphenyl)-propan,
1,1-Bis-(4-hydroxyphenyl)-cyclohexan,
2,2-Bis-(3,5-dichlor-4-hydroxyphenyl)-propan
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan,

Die Diphenole können sowohl einzeln als auch im Gemisch eingesetzt werden. Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propran, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S 33ff, Interscienсs Publ. 1964).

Die aromatischen Polycarbonate besitzen in der Regel mittlere Molekulargewichte $\overline{M}_w$ von ca. 10.000 bis 200.000, vorzugsweise 20.000 bis 80.000 (ermittelt durch Gelchromatographie nach vorheriger Eichung).

Copolycarbonate im Sinne der Erfindung sind insbesondere Polydiorganosiloxan-Polycarbonat-Blockcopolymere mit mittlerem Molekulargewicht $\overline{M}_w$ von ca. 10.000 bis 200.000, vorzugsweise 20.000 bis 80.000 (ermittelt durch Gelchromatographie nach vorheriger Eichung) und mit einem Gehalt an aromatischen Carbonatstruktureinheiten von etwa 75 bis 97,5 Gew.-%, bevorzugt 85 bis 97 Gew.-% und einem Gehalt an Polydiorganosiloxanstruktureinheiten von etwa 25 bis 2,5 Gew.-%, bevorzugt 15 bis 3 Gew.-%, wobei die Blockcopolymeren ausgehend von $\alpha,\omega$-Bishydroxyaryloxyendgruppen-haltigen Polydiorganosiloxanen mit einem Polymerisationsgrad $P_n$ von 5 bis 100, bevorzugt 20 bis 80, hergestellt werden.

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

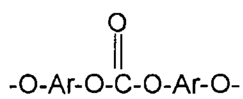

(1),

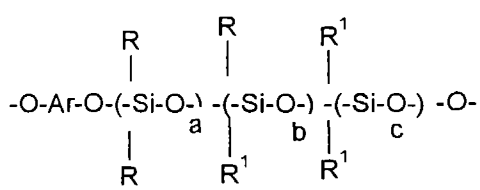

(2),

worin

Ar gleiche oder verschiedene Arylreste aus Diphenolen sind und

R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und
die Anzahl der Diorganosiloxy-Einheiten n=a+b+c= 5 bis 100 , vorzugsweise 20 bis 80, ist.

Alkyl ist in vorstehender Formel (2) beispielsweise $C_1$-$C_{20}$-Alkyl, Alkenyl ist in vorstehender Formel (2) beispielsweise $C_2$-$C_6$-Alkenyl; Aryl ist in vorstehender Formel (2) $C_6$-$C_{14}$-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man $\alpha,\omega$-Bishydroxyaryloxyendgruppen-haltige Polydiorganosiloxane zusammen mit anderen Diphenolen, gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige $\alpha,\omega$-Bishydroxyaryloxyendgruppen-haltige Polydiorganosiloxane sind z.B. aus US 3 419 634 bekannt.

ABS-Pfropfpolymerisate im Sinne der Erfindung sind Pfropfpolymerisate aus

A.1) 5 bis 95, vorzugsweise 30 bis 80 Gew.-Teile, einer Mischung aus

A.1.1) 50 bis 95 Gew.-Teilen Styrol, $\alpha$-Methylstyrol, halogen- oder methylkernsubstituiertem Styrol, $C_1$-$C_8$-Alkylmethacrylat, insbesondere Methylmethacrylat, $C_1$-$C_8$-Alkylacrylat, insbesondere Methylacrylat oder Mischungen dieser Verbindungen und
A.1.2) 5 bis 50 Gew.-Teilen Acrylnitril, Methylacrylnitril, $C_1$-$C_8$-Alkylmethacrylaten, insbesondere Methylmethacrylat, $C_1$-$C_8$-Alkylacrylat, insbesondere Methylacrylat, Maleinsäureanhydrid, $C_1$-$C_4$-alkyl- bzw. phenyl-N-substituierte Maleinimide oder Mischungen dieser Verbindungen auf

A.2) 5 bis 95, vorzugsweise 20 bis 70 Gew.-Teilen Butadien, Polybutadien oder Butadien/Styrol-Copolymerisat mit einer Glasübergangstemperatur unter -10°C.

Solche Pfropfpolymerisate sind z.B. in der DE-OS 2 035 390 (=US-PS 3 644 574) oder in der DE-OS 2 248 242 (=GB-PS 1 409 275) beschrieben.

Da bei der Pfropfreaktion die Pfropfmonomere bekanntlich nicht unbedingt vollständig auf die Pfropfgrundlage ausgepfropft werden, entstehen aus den Pfropfmonorneren Copolymerisate. Unter dem Begriff ABS-Pfropfpolymerisate sind auch solche Produkte zu verstehen, die bedingt durch Polymerisation eben diese Copolymere enthalten.

Der mittlere Teilchendurchmesser $d_{50}$ des ABS-Pfropfpolymerisates beträgt im allgemeinen 0,5 bis 5 nm, vorzugsweise 0,1 bis 2 nm. Der mittlere Teilchendurchmesser $d_{50}$ ist der Durchmesser, oberhalb und unterhalb dessen jeweils 50 Gew.-% der Teilchen liegen. Es kann mittels Ultrazentrifugenmessungen (W. Scholtan, H. Lange, Kolloid, Z. Polymere 250 (1972), 782-796) bestimmt werden.

Polyolefine sind Polyethylen, Polypropylen, Poly-1-buten und Polymethylpenten, die noch geringe Mengen nicht konjugierter Diene einpolymerisiert enthalten können. Diese Polymerisate sind bekannt und in Roempp's Chemielexikon, 8. Auflage 1987, Bd. 5, Seite 3307 und in der dort zitierten Literatur beschrieben. Bevorzugt ist Polypropylen.

Als Polyamide werden in den thermoplastischen Polyamidformmassen im allgemeinen aliphatische Polyamide oder Polyamide mit überwiegend aliphatischem Anteil eingesetzt. Bevorzugt sind Polyamid 6 oder Polyamid 66 oder Copolyamide von Polyamid 6 mit Diaminen (bevorzugt $C_4$-$C_{16}$-, insbesondere $C_4$-$C_8$-Alkylendiaminen) und Dicarbonsäuren (bevorzugt $C_4$-$C_{12}$-, insbesondere $C_4$-$C_8$-Alkylendicarbonsäuren) oder Polyamide 66 mit einem Comonomerenanteil von höchstens 20 Gew.-%.

**Komponente B**

Borsäureanhydrid oder Bortrioxid [ $B_2O_3$] ist allgemein bekannt und z.B. von Aldrich käuflich erhältlich

**Komponente C**

Als Füllstoffe und Verstärkungsstoffe können Glasfasern, Glaskugeln, Glimmer, Silikate, Quarz, Talkum, Titandioxid, Wollastonit, u.a. eingesetzt werden, die auch obenflächenbehandelt sein können. Bevorzugte Verstärkungsstoffe

sind handelsübliche Glasfasern. Die Glasfasern, die im allgemein einen Faserdurchmesser zwischen 8 und 14 μm haben, können als Endlosfasern oder als geschnittene oder gemahlene Glasfasern eingesetzt werden, wobei die Fasern mit einem geeigneten Schlichtesystem und einem Haftvermittler bzw. Haftvermittlersytem auf Silanbasis ausgerüstet sein können. Vorzugsweise werden der Mischung 8 bis 45, insbesondere 10 bis 40 Gew.-Teile Füll- und Verstärkungsstoffe zugesetzt.

**Komponente D**

Als Flammschutzadditive sind handelsübliche organische Verbindungen oder Halogenverbindungen mit Synergisten oder handelsübliche organische Stickstoffverbindungen oder organisch/anorganische Phosphorverbindungen geeignet. Auch mineralische Flammschutzadditive wie Mg-Hydroxid oder Ca-Mg-Carbonat-Hydrat können eingesetzt werden.

Die erfindungsgemäßen Formmassen können bis zu 20, vorzugsweise 3 bis 18, insbesondere 6 bis 15 Gew.-Teile halogenierte Verbindungen und bis zu 8, vorzugsweise 2 bis 6 Gew.-Teile Antimonverbindungen, insbesondere Antimontrioxid oder Antimonpentoxid enthalten.

Als halogenhaltige, insbesondere bromierte und chlorierte, organische Verbindungen seien beispielhaft genannt:

Ethylen-1,2-bistetrabromphthalimid,
Epoxidiertes Tetrabrombisphenol A-Harz,
Tetrabrombisphenol-A-oligocarbonat,
Tetrachlorbisphenol-A-oligocarbonat,
Pentabrompolyacrylat,
bromiertes Polystyrol.

Pentabrompolyacrylat hat im allgemeinen mittlere Molekulargewichte $\overline{M}_w$ (Gewichtsmittel) von 10.000 bis 200.000, bromiertes Polystyrol im allgemeinen 10.000 bis 500.000.

Bevorzugt werden epoxidiertes Tetrabrombisphenol-A und Tetrabrombisphenol-A-Oligocarbonat verwendet.

Expoxidiertes Tetrabrombisphenol-A ist ein bekanntes Diepoxidharz mit einem Molekulargewicht von etwa 350 bis etwa 2.100, vorzugsweise 360 bis 1.000, besonders bevorzugt 370 bis 400, und besteht im wesentlichen aus mindestens einem Kondensationsprodukt von Bisphenol A und Epihalogenhydrin und wird beschrieben durch die Formel (I)

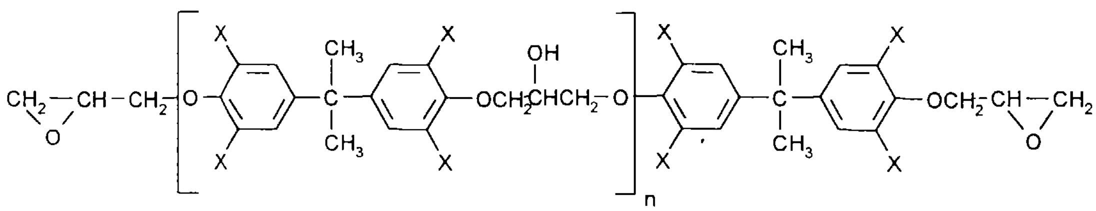

worin X Wasserstoff oder Brom darstellt und n eine Durchschnittszahl zwischen Null und weniger als 2,3 ist (vgl. z.B. EP-A 180 471).

Tetrabrombisphenol-A-oligocarbonat bzw. Tetrachlorbisphenol-A-oligocarbonat ist beschrieben durch die Formel (II), wobei die Oligomere entweder mit Phenol oder mit Tribromphenol bzw. Trichlorphenol terminiert werden:

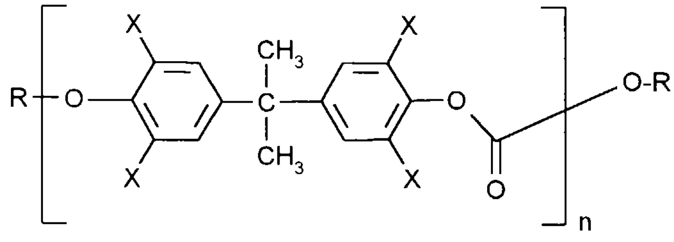

(II)

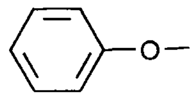

R = oder

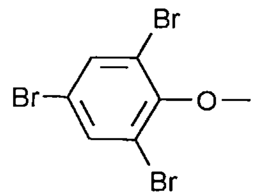

worin X Wasserstoff, Brom oder Chlor darstellt, n ist eine Durchschnittszahl zwischen 4 und 7.

Tetrabrom(chlor)bisphenol-A-oligocarbonat ist bekannt und nach bekannten Verfahren herstellbar.

Als organische Phosphorverbindungen sind die Phosphorverbindungen gemäß EP-A 345 522 (US-PS 061.745) oder DE-OS 43 28 656.9 in den dort beschriebenen Mengen geeignet, z.B. Triphenylphosphat, oligomere Phosphate, Resorcindiphosphat oder eine Mischung daraus.

**Komponente E**

Als Elastomermodifikatoren kommen handelsübliche EP(D)M-Kautschuke, Pfropfkautschuke auf Basis Butadien, Styrol, Acrylnitril (siehe z.B. die oben beschriebenen ABS-Propfpolymerisate), Acrylatkautschuke, thermoplastische Polyurethane oder EVA-Copolymere mit oder ohne funktionelle Kopplungsgruppen infrage.

Die erfindungsgemäßen Formmassen können übliche Additive, wie Gleit- und Entformungsmittel, Nukleierungsmittel, Antistatika, Stabilisatoren enthalten.

Die erfindungsgemäßen Formmassen aus den jeweiligen Komponenten und gegebenenfalls weiteren bekannten Zusätzen wie Stabilisatoren, Farbstoffen, Pigmenten, Gleit- und Entformungsmitteln, Verstärkungsstoffen, Nukleierungsmittel sowie Antistatika, können hergestellt werden, indem man die jeweiligen Bestandteile in bekannter Weise vermischt und bei Temperaturen von 180°C bis 330°C in üblichen Aggregaten wie Innenknetern, Extrudern, Doppelwellenschnecken schmelzcompoundiert oder schmelzextrudiert.

**Komponente F**

Antimontrioxid ist allgemein bekannt und kann z. B. von Campine käuflich erworben werden.

**Komponente G**

Kupferpyrophosphat-Hydrat [ $Cu_2P_2O_7H_2O$] ist allgemein bekannt und z.B. von Aldrich oder Riedel de Haen käuflich erhältlich

Die erfindungsgemäßen Formmassen können übliche Additive, wie Gleit-und Entformungsmittel, Nukleierungsmittel, Antistatika, Stabilisatoren enthalten.

Die erfindungsgemäßen Formmassen aus den jeweiligen Komponenten und gegebenenfalls weiteren bekannten Zusätzen wie Stabilisatoren, Farbstoffen, Pigmenten, Gleit- und Entformungsmitteln, Verstärkungsstoffen, Nukleierungsmitteln sowie Antistatika, können hergestellt werden, indem man die jeweiligen Bestandteile in bekannter Weise vermischt und bei Temperaturen von 180°C bis 330°C in üblichen Aggregaten wie Innenknetern, Extrudern, Doppelwellenschnecken schmelzcompoundiert oder schmelzextrudiert.

**Beispiele**

Die Grenzviskosität von Polybutylenterephthalat wird in Phenol/o-Dichlorbenzol (1:1 Gew.-Teile) bei 25°C gemessen.

Beispiel 1 (erfindungsgemäß)*

| | |
|---|---|
| 0,100 Gew.-Teile | Borsäureanhydrid wird mit einem Compound aus |
| 86,225 Gew.-Teile | Polybutylenterephthalat, Grenzviskosität I.V. = 0,90-0,95 dl/g |
| 10,000 Gew.-Teile | Makrolon® 2800 natur(Polycarbonat auf Basis Bisphenol A, Bayer AG) |
| 3,200 Gew.-Teile | $Sb_2O_3$ |
| 0,475 Gew.-Teile | Stabilisatoren und Nukleierungsmittel |

physikalisch gemischt und anschließend mittels eines Extruders compoundiert. Das erhaltene Granulat wird auf einer Spritzgießmaschine zu Formkörpern verarbeitet.

Beispiel 2 (erfindungsgemäß)*

| | |
|---|---|
| 0,500 Gew.-Teile | Borsäureanhydrid wird mit einem Compound aus |
| 85,825 Gew.-Teile | Polybutylenterephthalat, Grenzviskosität I.V. = 0,90-0,95 dl/g |
| 10,000 Gew.-Teile | Makrolon® 2800 natur, Bayer AG |
| 3,200 Gew.-Teile | $Sb_2O_3$ |
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

Beispiel 3 (erfindungsgemäß)*

| | |
|---|---|
| 0,100 Gew.-Teile | Borsäureanhydrid wird mit einem Compound aus |
| 89,025 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,400 Gew.-Teile | Kupferpyrophosphat-Hydrat |
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

Beispiel 4 (erfindungsgemäß)*

| | |
|---|---|
| 0,500 Gew.-Teile | Borsäureanhydrid wird mit einem Compound aus |
| 88,625 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,400 Gew.-Teile | Kupferpyrophosphat-Hydrat |
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 5** (erfindungsgemäß)

| | |
|---|---|
| 0,100 Gew.-Teile | Borsäureanhydrid wird mit einem Compound aus |
| 99,325 Gew.-Teile | Polybutylenterephthalat, Grenzviskosität I.V. = 0,90-0,95 dl/g |
| 0,200 Gew.-Teile | Makrolexgelb 3G, Bayer AG |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

*Die Beispiele 1 bis 4 sind in grau eingefärbt. Eingesetzt wurden 1,1725 Gew.-Teile einer Mischung aus Lichtgelb 3R, Makrolexorange 3G, Bayferrox 130M, Bayertitan RFK 3 und Flammruß 101.

*Die Beispiele 1 bis 4 sind in grau eingefärbt. Eingesetzt wurden 1,1725 Gew.-Teile einer Mischung aus Lichtgelb 3R, Makrolexorange 3G, Bayferrox 130M, Bayertitan RFK 3 und Flammruß 101.

**Beispiel 6** (erfindungsgemäß)

| | |
|---|---|
| 0,100 Gew.-Teile | Borsäureanhydrid wird mit einem Compound aus |
| 96,125 Gew.-Teile | Polybutylenterephthalat, Grenzviskosität I.V. = 0,90-0,95 dl/g |
| 0,200 Gew.-Teile | Makrolexgelb 3G, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 7** (erfindungsgemäß)

| | |
|---|---|
| 0,100 Gew.-Teile | Borsäureanhydrid wird mit einem Compound aus |
| 96,125 Gew.-Teile | Polybutylenterephthalat, Grenzviskosität I.V. = 0,90-0,95 dl/g |
| 0,200 Gew.-Teile | Makrolexblau RR, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 8** (erfindungsgemäß)

| | |
|---|---|
| 0,100 Gew.-Teile | Borsäureanhydrid wird mit einem Compound aus |
| 96,125 Gew.-Teile | Polybutylenterephthalat, Grenzviskosität I.V. = 0,90-0,95 dl/g |
| 0,200 Gew.-Teile | Makrolexgrün G, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 9** (erfindungsgemäß)

| | |
|---|---|
| 0,100 Gew.-Teile | Borsäureanhydrid wird mit einem Compound aus |
| 96,125 Gew.-Teile | Polybutylenterephthalat, Grenzviskosität I.V. = 0,90-0,95 dl/g |
| 0,200 Gew.-Teile | Makrolexviolett RR, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 10** (erfindungsgemäß)

| | |
|---|---|
| 0,100 Gew.-Teile | Borsäureanhydrid wird mit einem Compound aus |
| 96,125 Gew.-Teile | Polybutylenterephthalat, Grenzviskosität I.V. = 0,90-0,95 dl/g |
| 0,200 Gew.-Teile | Makrolexrot 5B, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 11** (erfindungsgemäß)

| | |
|---|---|
| 0,100 Gew.-Teile | Borsäureanhydrid wird mit einem Compound aus |
| 99,425 Gew.-Teile | Polybutylenterephthalat, Grenzviskosität I.V. = 0,90-0,95 dl/g |

| | |
|---|---|
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 12** (erfindungsgemäß)

| | |
|---|---|
| 0,050 Gew.-Teile | Borsäureanhydrid wird mit einem Compound aus |
| 99,475 Gew.-Teile | Polybutylenterephthalat, Grenzviskosität I.V. = 0,90-0,95 dl/g |
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 13** (erfindungsgemäß)

| | |
|---|---|
| 0,010 Gew.-Teile | Borsäureanhydrid wird mit einem Compound aus |
| 99,515 Gew.-Teile | Polybutylenterephthalat, Grenzviskosität I.V. = 0,90-0,95 dl/g |
| 0,475 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 14** (Vergleich)

| | |
|---|---|
| 99,525 Gew.-Teile | Polybutylenterephthalat, Grenzviskosität I.V. = 0,90-0,95 dl/g |
| 0,475 Gew.-Teile | Stabilisatoren und Nukleierungsmittel |

werden physikalisch gemischt und anschließend mittels eines Extruders compoundiert.

Das erhaltene Granulat wird auf einer Spritzgußmaschine zu Platten verspritzt.

**Beispiel 15** (erfindungsgemäß)

| | |
|---|---|
| 0,1 Gew.-Teile | Borsäureanhydrid wird mit einem Compound aus |
| 99,9 Gew.-Teile | Polyamid Durethan B 30 SK (PAG), Bayer AG |

physikalisch gemischt und anschließend mittels eines Extruders compoundiert. Das erhaltene Granulat wird auf einer Spritzgußmaschine zu Platten verspritzt.

**Beispiel 16** (erfindungsgemäß)

| | |
|---|---|
| 0,05 Gew.-Teile | Borsäureanhydrid wird mit einem Compound aus |
| 99,95 Gew.-Teile | Durethan B 30 SK, Bayer AG |

physikalisch gemischt und anschließend mittels eines Extruders compoundiert. Das erhaltene Granulat wird auf einer Spritzgußmaschine zu Platten verspritzt.

**Beispiel 17** (erfindungsgemäß)

| | |
|---|---|
| 0,01 Gew.-Teile | Borsäureanhydrid wird mit einem Compound aus |
| 99,99 Gew.-Teile | Durethan B 30 SK, Bayer AG |

physikalisch gemischt und anschließend mittels eines Extruders compoundiert. Das erhaltene Granulat wird auf einer Spritzgußmaschine zu Platten verspritzt.

**Beispiel 18** (Vergleich)

| | |
|---|---|
| 100 Gew.-Teile | Durethan B 30 SK, Bayer AG |

werden auf einer Spritzgußmaschine zu Platten verspritzt. Die Platten wurden mittels eines Nd-YAG-Lasers beschrieben.

**Beispiel 19** (erfindungsgemäß)

| | |
|---|---|
| 0,100 Gew.-Teile | Borsäureanhydrid wird mit einem Compound aus |
| 89,325 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,200 Gew.-Teile | Lichtgelb 6R, Bayer AG |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 20** (erfindungsgemäß)

| | |
|---|---|
| 0,100 Gew.-Teile | Borsäureanhydrid wird mit einem Compound aus |
| 86,125 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,200 Gew.-Teile | Lichtgelb 6R, Bayer AG |
| 3,200 Gew.-Teile | $Sb_2O_3$ |
| 0,375 Gew.-Teile | Stabilisatoren und Nukleierungsmittel |

physikalisch gemischt und anschließend mittels eines Extruders compoundiert. Das erhaltene Granulat wird auf einer Spritzgußmaschine zu Platten verspritzt.

**Beispiel 21** (Vergleich)

Ein Compound aus

| | |
|---|---|
| 86,225 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,200 Gew.-Teile | Lichtgelb 6R, Bayer AG |
| 3,200 Gew.-Teile | $Sb_2O_3$ |
| 0,375 Gew.-Teile | Stabilisatoren und Nukleierungsmittel |

wird physikalisch gemischt und anschließend mittels eines Extruders compoundiert. Das erhaltene Granulat wird auf einer Spritzgußmaschine zu Platten verspritzt.

**Beispiel 22** (Vergleich)

Ein Compound aus

| | |
|---|---|
| 89,425 Gew.-Teile | Polybutylenterephthalat, Grenzviskosität I.V. = 0,90-0,95 dl/g |
| 10,000 Gew.-Teile | Makrolon® 2800 natur, Bayer AG |
| 0,200 Gew.-Teile | Lichtgelb 6R, Bayer AG |
| 0,375 Gew.-Teile | Stabilisatoren und Nukleierungsmittel |

wird physikalisch gemischt und anschließend mittels eines Extruders compoundiert. Das erhaltene Granulat wird auf einer Spritzgußmaschine zu Platten verspritzt.

Alle Platten wurden mittels eines Nd-YAG-Lasers beschrieben.

Je nach Intensität der Laserstrahlenenergie und Schreibgeschwindigkeit werden schwarze, dunkle oder dunkelgraue Zeichen auf hellem oder farbigem Hintergrund erzeugt:

**Ergebnis aus den Beispielen 1 bis 22**

| Beispiele | 1 | 2 | 3 | 4 | 5 | 6 | 7 | 8 | 9 | 10 | 11 |
|---|---|---|---|---|---|---|---|---|---|---|---|
| | erfindungsgemäße Versuche | | | | | | | | | | |
| Hintergrundfarbe | grau | grau | grau | grau | gelb | gelb | blau | grün | violett | rot | hell |
| Schrift | dunkel | sehr dunkel | dunkel | sehr dunkel | dunkel | sehr dunkel | sehr dunkel | sehr dunkel | sehr dunkel | sehr dunkel | sehr dunkel |
| Kontrastbewertung | 1 | 1+ | 2(+) | 1- | 3- | 1- | 2+ | 2 | 2- | 2- | 1 |

| Beispiele | 12 | 13 | 14 | 15 | 16 | 17 | 18 | 19 | 20 | 21 | 22 |
|---|---|---|---|---|---|---|---|---|---|---|---|
| | erf.-gemäß | | Vergl. | erfindungsgemäß | | | Vergl. | erf.-gemäß | | Vergleiche | |
| Hintergrundfarbe | hell | hell | hell | hell | hell | hell | hell | gelb | gelb | gelb | gelb |
| Schrift | dunkel | dunkel | leicht grau | sehr dunkel | dunkel | dunkel | leicht grau | dunkel | sehr dunkel | dunkel | leicht grau |
| Kontrastbewertung | 1- | 2 | 5 | 1 | 1- | 2 | 4- | 1- | 1 | 2 | 5 |

Bewertungen: 1 = sehr gut 2 = gut 3 = befriedigend
4 = ausreichend 5 = nicht akzeptabel
+ = graduell besser als Bewertungsstufe
- = graduell schlechter als Bewertungsstufe

Alle erfindungsgemäßen Beispiele zeichnen sich im Vergleich zu den Vergleichsbeispielen durch eine verbesserte Oberflächenbeschaffenheit und einer abriebfesteren Beschriftung aus.

Beschriftet wurde mit einem Nd:YAG-Lasergerät der Fa. Rofin Sinar, Bezeichnung RSM Base Line 60, bei einer Wellenlänge von 1.064 nm, einem Zeichenabstand von 0,2 mm und einer Leistung von 60W. Dabei wurde eine 1,8 mm-Modemblende verwendet. Die eingestellten Stromstärken lagen bei 12 bis 18 A, die Frequenzen wurden festgelegt zwischen 1.000 und 8.000 Hz. Geprüft wurde bei einer Schreibgeschwindigkeit von 300mm/s.

**Patentansprüche**

1. Thermoplastische Formmassen, enthaltend

   A) 99,995 bis 30 Gew.-Teile thermoplastisches Polymer,

   B) 0,005 bis 3 Gew.-Teile Borsäureanhydrid,

C) 0 bis 50 Gew.-Teile Füll- und Verstärkungsstoffe,

D) 0 bis 60 Gew.-Teile Flammschutzadditive,

E) 0 bis 30 Gew.-Teile Elastomermodifikatoren,

F) 0 bis 8 Gew.-Teile Antimontrioxid

G) 0 bis 3 Gew.-Teile Kupfer (II)-pyrophosphat-Hydrat.

**2.** Thermoplastische Formmasse gemäß Anspruch 1, wobei als Komponente (A) Polymere oder Copolymere auf Basis von Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können.

**3.** Thermoplastische Formmassen gemäß Anspruch 1, wobei als Flammschutzadditive Magnesiumhydroxid, Calzium-Magnesium-Carbonat-Hydrat, halogenierte organische Verbindungen, gegebenenfalls in Kombination mit Antimonoxiden, eingesetzt werden.

**4.** Thermoplastische Formmassen gemäß Anspruch 1, wobei als halogenierte Verbindungen Ethylen-1,2-bis-tetrabromphthalimid, epoxidiertes Tetrabrombisphenol A-Harz, Tetrabrombisphenol-A-oligocarbonat, Penta-brompolyacrylat, bromiertes Polystyrol und/ oder organische Phosphorverbindungen eingesetzt werden.

**5.** Verwendung der Formmassen gemäß Anspruch 1 zur Herstellung von Formkörpern.

**6.** Formkörper, hergestellt aus thermoplastischen Formmassen gemäß Anspruch 1.

**7.** Verwendung nach Anspruch 1 und 6 zur Aufbringung von optischen Informationen mittels Laserenergie.

**8.** Bilder gemäß Anspruch 1 und 7.

**9.** Passbild, Portrait, Foto übertragen gemäß Anspruch 8.